Europäisches Patentamt

European Patent Office

Office européen des brevets

(19)

(11) Veröffentlichungsnummer: **0 171 047**
**B1**

(12) **EUROPÄISCHE PATENTSCHRIFT**

(45) Veröffentlichungstag der Patentschrift: **28.11.90**

(21) Anmeldenummer: **85109778.2**

(22) Anmeldetag: **03.08.85**

(51) Int. Cl.⁵: **G 01 P 5/07,** G 01 F 1/10,
G 01 P 13/04

(54) **Vorrichtung zur Messung der Drehzahl und gegebenenfalls der Drehrichtung eines Flügelrades eines Flügelrad-Durchflussmessers in strömenden Flüssigkeiten.**

(30) Priorität: **09.08.84 DE 3429326**

(43) Veröffentlichungstag der Anmeldung:
**12.02.86 Patentblatt 86/07**

(45) Bekanntmachung des Hinweises auf die
Patenterteilung:
**28.11.90 Patentblatt 90/48**

(84) Benannte Vertragsstaaten:
**AT BE CH DE FR GB IT LI LU NL SE**

(56) Entgegenhaltungen:
**DE-A-3 241 222**
**GB-A-1 404 133**
**US-A-4 333 354**

(73) Patentinhaber: **Engelmann, Hans**
**Rudolf-Diesel-Strasse 24**
**D-6908 Wiesloch-Baiertal (DE)**

(72) Erfinder: **ENGELMANN, Hans**
**Rudolf-Diesel-Strasse 24-26**
**6908 Wiesloch/Baiertal (DE)**
Erfinder: **SCHMITT, Franz-Karl**
**Sudetenstrasse 23**
**6929 Angelbachtal (DE)**

(74) Vertreter: **Mierswa, Klaus, Dipl.-Ing.**
**Friedrichstrasse 171**
**D-6800 Mannheim 24 (DE)**

Courier Press, Leamington Spa, England.

## Beschreibung

Die Erfindung geht aus von einer Vorrichtung zur Messung der Drehzahl und gegebenenfalls der Drehrichtung eines Flügelrades eines Flügelrad-Durchflußmessers in strömenden Flüssigkeiten gemäß dem Oberbegriff des Anspruchs 1.

Durch die GB—A—1 404 133 ist ein Windmeßgerät mit einem Flügelrotor bekanntgeworden, der ein Paar von peripher angeordneten Meßwertgebern nahe der Bewegungsbahn des Rotors aufweist zur Messung der Geschwindigkeit und der Drehrichtung desselben. Bei Vorbeistreichen der Flügel des Flügelrotors geben die Meßwertgeber zyklisch elektrische Signale ab, welche geeignet weiterverarbeitet werden, wobei die Signale durch Kapazitätsänderungen beeinflußbar sind.

Durch die US—A—4 333 354 ist ein Meßprinzip bekanntgeworden, daß nämlich ein Rotor oder ein Flügelrad innerhalb eines Flügelrad-Durchflußmessers die Impedanz der strömenden Flüssigkeit bei Rotation verändert, wobei diese Veränderungen mittels einer elektrischen Schaltung gemessen werden können. Dazu weist die Vorrichtung drei Elektroden auf, an denen das Flügelrad dicht vorbeistreicht und dadurch Impedanzen zwischen den Elektroden ändert, wobei die Änderung an der mittleren Elektrode abgegriffen wird.

Des weiteren ist durch die DE—A—3 241 222 eine derartige Vorrichtung bekanntgeworden, die ein Gehäuse aufweist, in dem Elektroden in Abstand benachbart voneinander angeordnet und von der elektrolytischen Flüssigkeit benetzt sind, wobei in Rotation das Flügelrad mit einer Kante seiner Flügel dicht an den Elektroden vorbeistreichend angeordnet ist, an die mittels eines Impulsgenerators komplementäre Impulse einer Wechselspannung gelegt sind zur Messung der sich bei Rotation ändernden Impedanz des Elektrolyten innerhalb einer elektrischen Auswerteschaltung, wobei die Drehzahl und deren Änderung angezeigt wird. Dabei sind mindestens zwei Elektroden in einer Brückenschaltung geschaltet, so daß die Impedanz bzw. die Impedanzen des Elektrolyten zwischen den Elektroden mindestens einen Brückenwiderstand bilden. Der Brückenindikator ist ein Synchron-Demodulator, dessen Ausgangssignale in Rechteckimpulse zur Bestimmung der Drehzahl des Flügelrades umgewandelt werden. Dabei sind die mittels des Impulsgenerators erzeugten komplementären Impulse an die Elektroden über eine Treiberstufe gelegt, aus der für den Synchron-Demodulator und für einen nachgeschalteten Komparator das Bezugspotential gewonnen wird.

Diese bekannte Vorrichtung ist aufgrund der Verwendung einer Brückenschaltung für die heute auf dem Markt befindlichen elektronischen Bausteine noch nicht optimal ausgelegt, weil zum einen der Synchron-Demodulator eine hohe Versorgungsspannung benötigt und weil die Brücken-Auswertschaltung zum Aufbau in Gate-Array-Anwendung nicht geeignet ist.

Des weiteren hat sich gezeigt, daß die Funktion einer derartigen Vorrichtung mit Flügelrad offensichtlich unabhängig davon ist, ob das strömende Medium ein Elektrolyt ist oder nicht. Bei hinreichend großer Störunterdrückung und hoher Selektion und Verstärkung in der nachfolgenden Auswerteschaltung können auch die dielektrischen Verschiebungsströme bzw. -spannungen diskriminiert werden, die an der mittleren Elektrode auftreten, wenn ein Wechselfeld die äußeren Elektroden aufgegeben ist und somit diese beiden äußeren Elektroden quasi einen Kbffensator bilden, in dessen Dielektrikum sich die dritte Elektrode befindet.

Der Erfindung liegt deshalb die Aufgabe zugrunde, eine Vorrichtung zur Messung der Drehzahl und gegebenenfalls der Drehrichtung eines Flügelrades eines Flügelraddurchmessers für strömende Flüssigkeiten zu schaffen, welche ohne Brückenschaltung arbeitet, einfacher im Schaltungsaufbau ist und deshalb für eine Gate-Array-Anwendung geeignet ist; insbesondere soll die Vorrichtung hoch diskriminierend ausgelegt sein, damit auch Änderungen es dielektrischen Verschiebungsstromes zwischen den äußeren beiden Elektroden bei nichtelektrolytischen, strömenden Flüssigkeiten diskriminiert werden können. Ebenso soll die Vorrichtung gegen Störungen weitestgehend unanfällig sein.

Diese Aufgabe wird erfindungsgemäß gelöst durch den Anspruch 1, Weitere vorteilhafte Ausgestaltungen der Erfindung sind in den Abhänigigen Ansprüchen gekennzeichnet.

Die erfindungsgemäße Vorrichtung besitzt den Vorteil, daß diese nunmehr auf eine volle Brückenschaltung verzichten kann. Die Spannung kann an der mittleren Elektrode direkt mit Masse verglichen werden, weshalb die Auswerteschaltung viel einfacher in ihrem Aufbau ist. Des weiteren fällt die doppelt so hohe Versorgungsspannung für den Synchron-Demodulator weg. Die gesamte Schaltung benötigt nur noch extrem geringe Versorgungsströme, weshalb sie für einen Batteriebetrieb bestens geeignet ist.

Ebenso kann nunmehr die gesamte Schaltung in Gate-Array-Technik aufgebaut werden, wodurch eine preiswerte Massenfertigung möglich ist. Denn die erfindungsgemäße Vorrichtung dient ja als Baustein in der Erfassung der Wärmekostenverteilung, weshalb eine technisch einfache und preiswerte Lösung für die Masenfertigung notwendig ist. Darüber hinaus besitzt die erfindungsgemäße Vorrichtung den entscheidenden Vorteil, daß diese insbesondere zur Diskrimierung von sich ändernden dielektrischen Verschiebungsströmen bei nichtelektrolytischen Flüssigkeiten geeignet ist Zur Messung dieser nur geringfügigen elektrischen Veränderung auf der mittleren Elektrode müssen Störungen weitestgehend ausgeblendet und unterdrückt werden. Aufgrund der sehr kurzen Synchron-Demodulationsimpulse, herrührend aus einem Kurzzeit-Impulsgeber zur Öffnung der Torschaltung, gegenüber der Dauer der Impulse an den äußeren beiden Elektroden werden Störungen weitestgehend ausgeblendet. Zusätzlich werden durch den Komparator in der nachfolgenden Meßschaltung Störungen ebenfalls ausgeblendet und unterdrückt. Insbesondere durch diese Maßnahme ist die erfindungsgemäße Vorrichtung praktisch nicht störanfällig für Störungen, die vom Impulsgenerator, den Elektroden oder den elektronischen Vorgängen hieren herrühren.

Dadurch, daß die Spannung an der mittleren Elektrode nur sehr kurzfristig impulsmäßig abgefragt wird, ist keine Mittelwertbildung nötig. Vorzugsweise wird die Spannung an der mittleren Elektrode im Zeitpunkt der negativen Flanke an einer der beiden äußeren Elektroden abgefragt. Die Schaltung stellt somit in vorteilhafter Weise einen dynamischen Spannungsteiler dar, wobei der Lastwiderstand vorzugsweise ein ohmscher Widerstand, aber auch induktiv oder kapazitiv, sein kann.

In einer vorteilhaften Ausgestaltung sind die Torschaltung mit Kondensator und der Kurzzeit-Impulsgeber zur Erzeugung zweier um 180 Grad phasenverschobener Synchron-Demodulationssignale $U_s$ und $U_{s'}$ doppelt vorhanden, wobei dadurch zwei um 180 Grad phasenverschobene Ausgangsspannungen $u_{14}$ und $u_{14'}$ der Torschalter erzeugt werden, deren Differenz vom Verstärker verstärkt wird. Dadurch entfällt das Zeitglied zur Abtrennung des Gleichspannungsanteils; ebenso entsteht am Ausgang des Verstärkers eine größere Differenzspannung und das Ausgangssignal ist vor allen Dingen gegen Störeinwirkungen, wie Änderung der Versorgungsspannung oder Spannungssprünge beim Einschalten, unempfindlich, weil wegen Fehlen des Zeitgliedes und dessen Zeitkonstante eine Verschiebung des Arbeitspunktes nicht eintreten kann.

In einer Seson deren Ausgestaltung werden als mittlere Elektrode die Flügel des Flügelrades verwendet, die dafür metallisch leitend sind. Dadurch kann direkt am Flügelrad über den Lastwiderstand eine sinusförmige Meßspannung abgegriffen werden, weil sich das Flügelrad innerhalb des dielektrischen Feldes zwischen den beiden äußeren Elektroden befindet, wenn an diese die genannten komplementären Impulse einer Wechselspannung gelegt sind.

Die beiden äußeren Elektroden bilden somit einen Kondensator, das Volumen zwischen diesen Elektroden bildet das Dielektrikum, wobei Änderungen des dielektrischen Verschiebungsstromes und der dadurch am Lastwiderstand gegen Masse hervorgerufene Spannungsabfall als Meßspannungssignale diskriminiert werden, die weiter verarbeitet werden. Aufgrund dieser Ausgestaltung ist es auch möglich, die Vorrichtungen schaltungstechnisch noch weiter zu vereinfachen. Auch das am Flügelrad abgenommene Signal kann galvanisch, kapazitiv oder induktiv ausgekoppelt werden.

Alle Schaltungsvarianten lassen sich auch mit unipolarer getakteter oder einer statischen Ansteuerung realisieren, allerdings erhält man dann elektrolytische Vorgänge an den Elektroden. Bei statischer Ansteuerung kann das Ausgangssignal direkt verstärkt und einer Auswertung zugeführt werden.

Zwei Beispiele der Erfindung sind in der Zeichnung dargestellt und anschließend beschrieben. Dabei zeigen:

Figur 1 das schematische Prinzip der in der Vorrichtung verwendeten Schaltung

Figur 2 eine Blockschaltbildung der Meßschaltung

Figur 3 den Aufbau einer Meßschaltung nach Figur 2 im Detail

Figur 4a—d die Spannungsverläufe an markanten Stellen der Meßschaltung in Figur 3

Figur 5 eine Blockschaltbildung einer weiteren Meßschaltung, bei der zwei Torschaltungen oder Schalter vorhanden sind und

Figur 6a—e die Spannungsverläufe an markanten Stellen der Meßschaltung gemäß der Figur 5.

In den Figuren sind gleiche Teile mit gleichen Bezugsziffern gekennzeichnet.

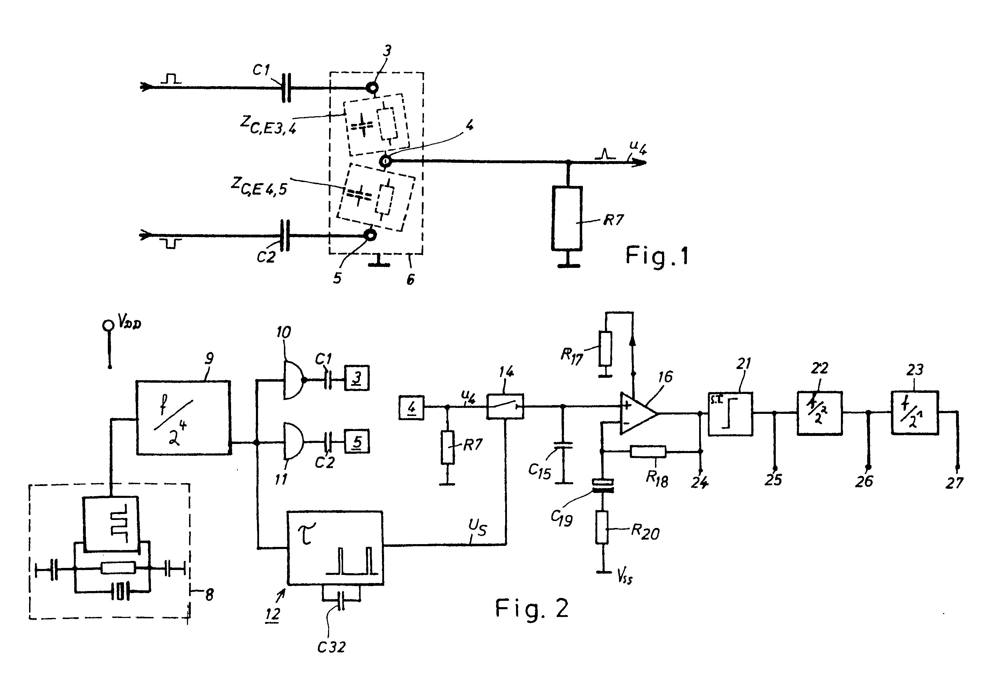

Figur 1 zeigt die schematische Grundschaltung von drei Elektroden 3, 4 und 5. Über zwei vorzugsweise gleiche Kondensatoren C1 und C2 werden komplementäre Impulse aus einem Impulsgenerator 8 (Figur 2) auf die beiden äußeren Elektroden 3 und 5 gegeben. Zwischen diesen beiden Elektroden 3 und 5 liegt eine mittlere Elektrode 4, wobei die Elektroden auf einem Kreisbogen oder auf einer Geraden angeordnet sein könne. Die Elektroden 3, 4 und 5 sind dergestalt zueinander angeordnet, daß die Impedanz $Z_{c,E3,4}$ zwischen den Elektroden 3 und 4 und die Impedanz $Z_{C,E4,5}$ zwischen den Elektroden 4 und 5 elektrisch in Reihe liegen. Dabei bedeutet der Index "C", daß die Impedanz kapazitiv sein kann, der Index "E" bedeutet, daß die Impedanz ein Leitwert sein kann, falls es sich um eine elektrolytische Flüssigkeit handelt. Die beiden Impedanzen $Z_{C,E,3,4}$ und $Z_{C,E4,5}$ können somit als Halbbrücken 6 bezeichnet werden. Die mittlere Elektrode 4 ist über einen Lastwiderstand, der vorzugsweise ein nur ohmscher Widerstand R7 ist, mit Masse verbunden, so daß bei Aufgabe der komplementären Impulse auf die Kondensatoren C1 und C2 an der mittleren Elektrode bzw. am Lastwiderstand R7 eine variable Spannung $u_4$ gegen Masse abgegriffen werden kann, die dem Verhältnis der Impedanz $Z_{C,E3,4}/Z_{C,E4,5}$ proportional ist. Durch diese Verhältnisbildung wird somit der Absolutwert der Impedanzen eliminiert. Diese Schaltung ist somit eine Spannungsteilerschaltung, die beiden Impedanzen zwischen den Elektroden 3—4 und 4—5 können deshalb als Halbbrücke 6 gegen Masse mit Mittenabgriff über die Elektrode 4 angesehen werden. Der ohmsche Lastwiderstand R7 ist im allgemeinen hochohmig gewählt.

Gemäß einer bevorzugten Augstaltung der Erfindung wird die mittlere Elektrode 4 durch die Flügel des Flügelrades gebildet, die in diesem Fall metallisch und somit elektrisch leitend sind. Die äußeren Elektroden 3,5 sind derart zueinander angeordnet, daß sich zwischen diesen beiden Elektroden bei Aufgabe der komplementären Impulse ein elektrisches Feld ausbildet, innerhalb dem sich die Flügel des Flügelrades drehen, wodurch sich aufgrund der dielektrischen Verschiebungsströme am Flügelrad ein der Stellung des Flügelrades proportionales elektrisches Spannungssignal $u_4$ sensieren läßt, das aufgrund der Drehung des Flügelrades sinusförmigen Verlauf mit einer überlagerten Gleichspannungskomponente besitzt. Dieses Signal wird nach dem Flügelrad vorzugsweise galvanisch, aber auch kapazitiv oder induktiv ausgekoppelt. Die galvanische Auskopplung ist hier die einfachste, weil die Spannung direkt mit Masse verglichen werden kann und die Sinusspannung direkt am Flügelrad entsteht.

Figur 2 zeigt eine Blockschaltbildung der Meßschaltung gemäß vorliegender Erfindung. Ein Impulsgenerator 8 erzeugt Impulse, die über einen Frequenzteiler 9 heruntergeteilt werden. Dieses Signal wird über einen Inverter 10 und dem nachgeschalteten Kondensator C1 auf die Elektrode 3 aufgegeben. Gleichzeitig wird das Signal aus dem Frequenzteiler 9 nichtinvertiert über den Kondensateor C2 auf die Elektrode 5 aufgegeben.

Die mittlere Elektrode 4 ist über den ohmschen Lastwiderstand R7 mit Masse verbunden, so daß an der mittleren Elektrode 4 das Spannungssignal $u_4$ abgegriffen werden kann. Dieses Spannungssignal $u_4$ wird auf einen elektronischen Schalter oder eine Torschaltung 14 gegeben, wobei in der Zeichnung diese Torschaltung als Schalter 14 dargestellt ist. Vorzugsweise wird die Torschaltung 14 durch einen CMOS-Array-Transistor gebildet.

Zur kurzzeitigen Öffnung dieser Torschaltung 14 wird ein Synchron-Demodulationssignal $U_S$ verwendet, welches in einem Kurzzeit-Impulsgeber 12 erzeugt wird. Dieser Kurzzeit-Impulsgeber 12 wird dabei vom Ausgangssignal des Frequenzteilers 9 direkt angesteuert. Die innerhalb dieses Kurzzeit-Impulsgebers 12 erzeugten Steuerimpulse $U_S$ für die Durchschaltung der Torschaltung 14 sind kurzzeitig gegenüber den Impulsen aus dem Frequenzteiler 9 und damit gegenüber den Impulsen an den Elektroden 3 und 5. Auf diese Weise stellt der Steuerimpuls $U_S$ ein echtes Synchron-Demodulationssignal $U_S$ dar, welches aus dem Impulsgenerator 8, dem Frequenzteiler 9 und dem Kurzzeit-Impulsgeber 12 zur Ansteuerung der Torschaltung 14 erhalten wird.

Der nun die Torschaltung 14 kurzzeitig passierende Spannungsimpuls $u_4$ während der Dauer der Öffnung der Torschaltung 14 durch das Synchron-Demodulations-signal $U_S$ lädt einen Kondensator C15 auf die jeweilige Meßspannung $u_4$ auf bzw der Kondensateor C15 wird auf die Meßspannung $u_4$ entladen. Damit besitzt die Spannung $u_{C15}(t)$ am Kondensator C15 bei sich drehendem Flügelrad zeitlich einen sinusähnlichen Verlauf. Diese Kondensatorspannung $u_{C15}(t)$ wird nun durch eine nachfolgende Verstärkerschaltung auf Amplitudenwerte von ca. 0,5 Volt oder mehr verstärkt.

Dazu wird die Kondensatorspannung einem Verstärker 16 zugeführt, vorzugsweise dem nichtinvertierenden Eingang eines Operationsverstärkers, der z.B. ein reiner Wechselspannungsverstärker ist. Die ohmschen Widerstände R17, R18 und R20 einschließlich des Kondensators C19 dienen zur Beschaltung des Operationsverstärkers 16, wobei der Kondensator zusammen mit dem Widerstand R20 ein Zeitglied mit einer bestimmten Zeitkonstante bilden. Über den Widerstand R18 wird der Gleichanteil des Ausgangssignals des Verstärkers 16 zum invertierten Eingang desselben gegengekoppelt.

Das Ausgangssignal des Verstärkers 16 wird nun einem Komparator zugeführt, der hier vorzugsweise ein Schmitt-Trigger 21 ist. Dadurch wird die immer noch sinusähnliche Ausgangsspannung des Verstärkers 16 in eine rechteckförmige Ausgangsspannung mit definierter Amplitude umgeformt. Die Ausgangsspannung des Schmitt-Triggers 21 wird nun über nachfolgende Frequenzteiler 22, 23 heruntergeteilt, wobei der besseren Anpaßbarkeit wegen nach dem Schmitt-Trigger 21, dem ersten Frequenzteiler 22 und dem zweiten Frequenzteiler 22 jeweils Ausgänge 25, 26 und 27 vorhanden sind.

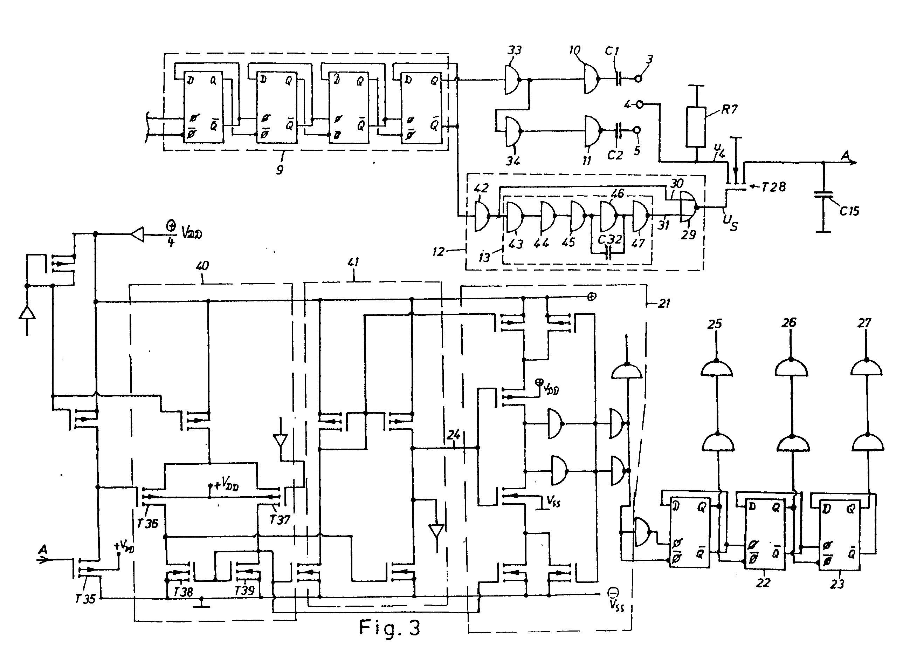

Figur 3 zeigt ein Beispiel der kompletten Meßschaltung vorliegender Erfindung unter Zugrundelegung des Blockschaltbildes der Figur 2. Die aus dem Frequenzteiler 9 kommenden Rechteckimpulse werden über die beiden Inverter 33, 10 und über den Kondensator C1 auf die Elektrode 3 aufgegeben. Zwischen den beiden Invertern 33 und 10 wird das Signal aus dem Frequenzteiler 9 abgegriffen und auf zwei weitere Inverter 34, 11 und über den Konensator C2 auf die Elektrode 5 aufgegeben. Die beiden Elektroden 3 und 5 bilden die äußeren Elektroden, zwischen denen eine mittlere Elektrode 4 angeordnet ist, die auch das Flügelrad des Flügelraddurchflußmessers sein kann. An die mittlere Elektrode 4 ist ein ohmscher Widerstand R7 nach Masse geschaltet, an dem die Meßspannung $u_4$ galvanisch abgegriffen wird. Die Meßspannung $u_4$ wird der Torschaltung T28 zugeführt, die vorzugsweise ein CMOS-Gate-Array-Transistor ist. Die von diesem Transistor T28 durchgelassenen Spannungsimpulse werden auf den Kondensator C15 gegeben und laden oder entladen diesen auf die Meßspannung.

Zur Schaltung des Transistors T28 dient das Synchron-Demodulationssignal $U_S$, welches in dem Kurzzeit-Impulsgeber 12 generiert wird. Dieser Kurzzeit-Impulsgeber 12 besteht aus einem veränderbaren Laufzeitglied 13 und einem NOR-Gatter 29. Das vom Frequenzteiler 9 herrührende Signal wird, vorzugsweise über einen Inverter 42, direkt auf den einen Eingang 30 des NOR-Gatters 29 gelegt. Gleichzeitig wird das aus dem Frequenzteiler 9 herrührende Signal, vorzugsweise nach dem Inverter 42, auf ein Laufzeitglied 13 gegeben, welches auf den anderen Eingang 31 des NOR-Gatters 29 geschaltet ist. Das Laufzeitglied 13 besteht dabei vorzugsweise aus einer Reihe von Invertern 43, 44, 45, 46 und 47, wobei über den Inverter 46 ein Kondensator C32 gelegt ist. Dieser Kondensator C32 wird dann eingesetzt, falls die Laufzeit des Laufzeitgliedes 13 zu kurz sein sollte. Das Ausgangssignal des NOR-Gatters 29 ist sehr kurzzeitig und stellt das Schaltsignal $U_S$, also das Synchron-Demodulationssignal $U_S$,

für den Transistor T28 dar, weshalb das Signal $U_s$ an das Gate des Transistors T28 gelegt ist.

Die sinusähnliche Kondensatorspannung $u_{C15}(t)$ wird nun (Schaltungspunkte A—A) auf einen Vorverstärker gegeben, der durch einen Transistor T35 realisiert ist. Das vorverstärkte Signal wird nun einem Differenzverstärker 40 zugeführt, der im wesentlichen aus den Transistoren T36, T37, T38 und T39 und der dazugehörigen Schaltung besteht, Danach wird das Signal einem Stromspiegel-Verstärker 41 und danach einem Komparator 21 zugeführt, der vorzugsweise ein Schmitt-Trigger ist; danach wird das Ausgangssignal des Schmitt-Triggers 21 frequenzmäßig in den Frequenzteilern 22 und 23 angepaßt. Die Ausgangsspannung aus einem der beiden Frequenzteiler 22, 23 dient nun zur Drehzahlbestimmung des Flügelrades, wobei die Ausgangsfrequenz der Frequenzteiler 22, 23 direkt proportional der Drehzahl des Flügelrades ist.

Die hier gezeigte Schaltung benötigt nur einen minimalen Speisestrom von Werten im Bereich einiger Mikro-Ampère, wobei mit dieser Schaltung ein großer Drehzahlbereich des Flügelrades erfaßt werden kann. Insbesondere ist diese Schaltung auch bei geringen Drehzahlen des Flügelrades genau, was einer geringen Strömungsgeschwindigkeit der strömenden Flüssigkeit und deren Erfassung enspricht, weshalb auch nur geringe Drehzahlen und somit geringe Durchflußmengen exakt angezeigt werden können.

Die Kurzzeitigkeit des Synchron-Demodulationssignals $U_s$ ist von entscheidender Bedeutung, weil die Vorgänge am Spannungsteiler gemäß der Figur 1 dynamische Vorgänge sind. Nur während sehr kurzer Abtastzeiten, also sehr kurzer Durchlässigkeit der Torschaltung 14 oder T28 hat die Schaltung Spannungsteilerfunktion, nur dann arbeitet die Schaltung als dynamischer Spannungsteiler.

Die in Figur 3 verwendeten Transistoren sind vorzugsweise CMOS-Array-Transistoren, wie auch die Torschaltung T28.

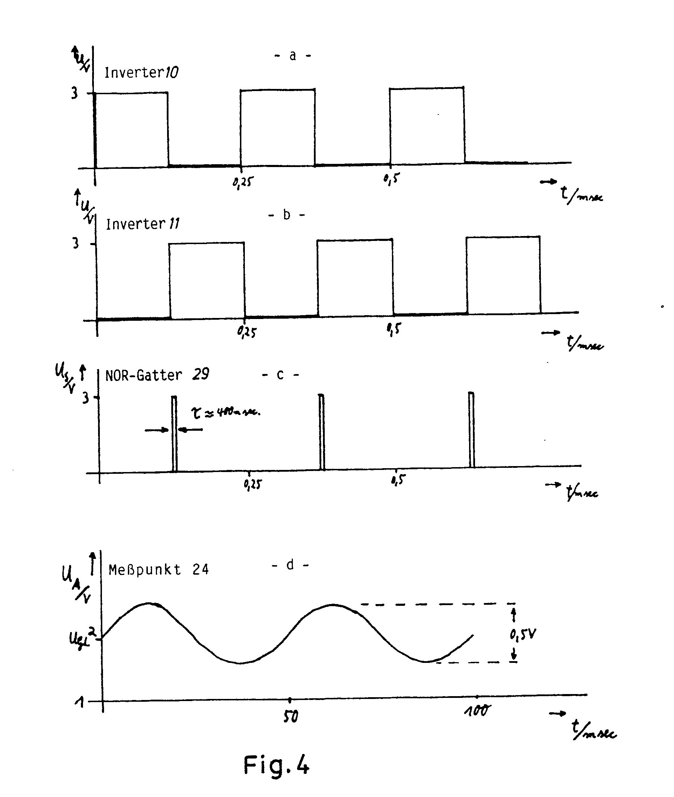

Die Figuren 4a bis 4d ziegen die Spannungsverläufe an markanten Stellen der Schaltung gemäß den Figuren 2 oder 3. Figur 4a zeigt den Spannungsverlauf am Inverter 10 und somit an der Elektrode 3; Figur 4b zeigt den Spannungsverlauf am Inverter 11 und somit an der Elektrode 5. Figur 4c zeigt das Synchron-Demodulationssignal $U_s$, welches das Ausgangssignal des NOR-Gatters 29 ist. Diese Ausgangssignale $U_s$ sind zeitlich sehr kurz und verhalten sich zeitlich zu den Signalen an den Elektroden wie ca. 1:600. Somit sind die Öffnungszeiten der Torschaltung 14 bzw. T28 sehr kurz. Ebenso ist ersichtlich, daß jeweils zu jeder negativen Flanke des Impulses am Inverter 10 bzw. an der Elektrode 3 ein Steuerimpuls $U_s$ generiert wird.

Figur 4d zeigt den zeitlichen Verlauf der sinusähnlichen Ausgangsspannung nach der Verstärkung durch den Verstärker 16 bzw. 41 im Meßpunkt 24. Dabei ist ersichtlich, daß die Ausgangsspannung des Verstärkers aus einem Gleichanteil und einem sinusähnlichen Wechselanteil besteht.

Diese Ausgangsspannung wird nun einem Komparator bzw. Schmitt-Trigger 21 aufgegeben.

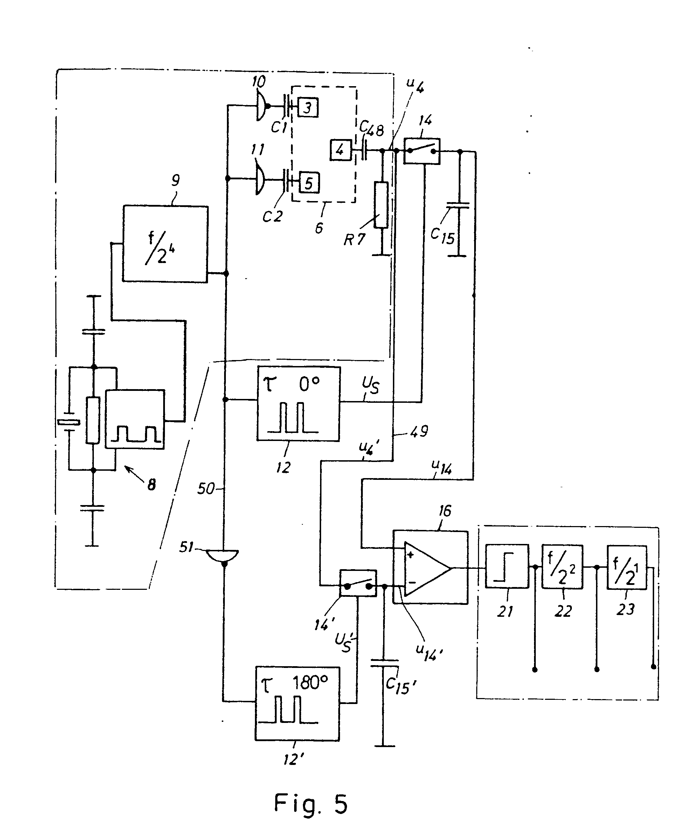

Figur 5 zeigt ein weiteres Beispiel einer Vorrichtung, bei der zwei Schalter 14, 14' mit je einem Kondensator C15, C15' und zwei Kurzzeit-Impulsgeber 12, 12' vorhanden sind. Die strichliniert umrahmten Teile entsprechen exakt den gleich bezifferten Teilen in der Schaltung der Figur 2, auf deren Beschreibung verwiesen wird. Lediglich ist hier die mittlere Elektrode 4 zur Unterdrückung eines Gleichspannungsanteils kapazitiv über einen kondensateor C48 an den Lastwiderstand R7 gelegt, an dem gegen Masse die (identischen) Meßspannungs-signale $u_4$ und $u_{4'}$, abgegriffen werden. Auch in dieser Schaltung ist der Lastwiderstand R7 bevorzugt ein ohmscher Widerstand, jedoch ist auch eine induktive oder kapazitive Beschaltung möglich.

Das Meßspannungssignal $u_4$ wird an die Torschaltung 14 gelegt, die über das Synchron-Demodulationssignal $U_s$ aus dem Kurzzeit-Impulsgeber 12 gesteuert wird. Das Ausgangssignal $u_{14,C15}$ wird als Eingangssignal an den nichtinvertierten Eingang des Verstärkers 16 gelegt. Ebenso wird das Meßspannungssignal $u_4$ über eine Leitung 49 an eine Torschaltung 14' gelegt und steht dort als Meßspannungssignal $u_{4'}$ an. Der Ausgang dieser Torschaltung 14' ist über einen Kondensator C15' an den invertierten Eingang des Verstärkers 16 als Eingangssignal $u_{14'C15'}$ gelegt.

Gleichzeitig wird das Ausgangssignal des Frequenzteilers 9 über eine Leitung 50 auf einen Inverter 51 gegeben, dessen Ausgangssignal wiederum einen Kurzzeit-Impulsgeber 12' ansteuert, dessen Synchron-Demodulationssignal $U_{s'}$ somit um 180 Grad phasenversetzt gegenüber dem Synchron-Demodulationssignal $U_s$ die Torschaltung 14' ansteuert. Deshalb liegen am Verstärker 16 zwei um 180 Grad phasenversetzt Spannungen $u_{14,C15}$ und $U_{14'C15'}$ an, wobei nur deren Differenz verstärkt wird. Der Verstärker arbeitet somit in diesem Fall als reiner Wechselspannungsverstärker, eine Beschaltung mit einem zusätzlichen RC-Glied entfällt.

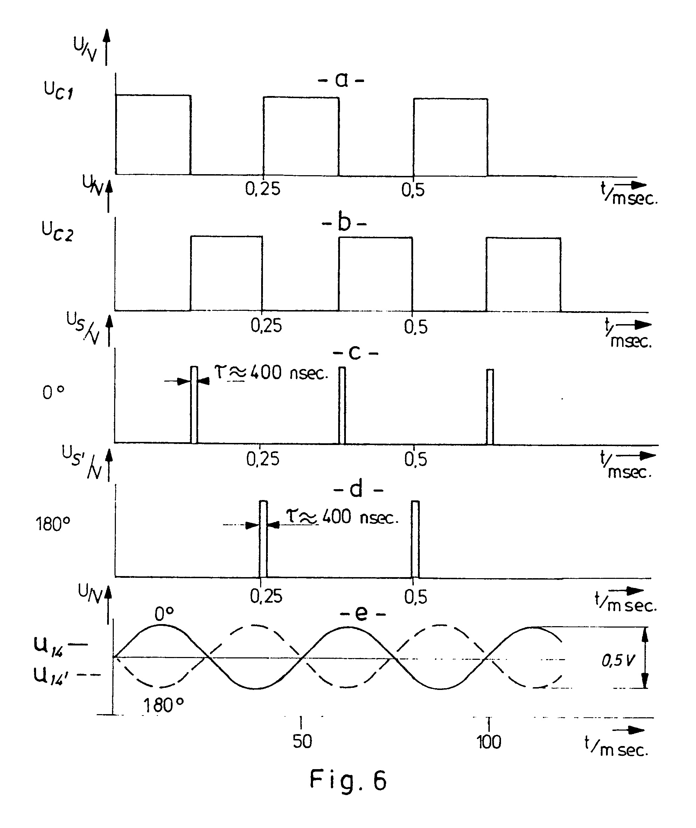

Die Figuren 6a—e zeigen die Spannungsverläufe an markanten Punkten der Schaltung gemäß Figur 5. Die Figuren 6a und b zeigen die Spannungsverläufe an den Elektroden 3 und 5, wobei ja die Spannungen um 180 Grad phasenversetzt sind. Die Figuren 6c und d zeigen die zugehörigen sehr kurzzeitigen Synchron-Demodulationssignale $U_s$ und $U_{s'}$, ebenfalls gegeneinander um 180 Grad phasenversetzt sind und jeweils an der abfallenden Flanke der Spannungen $U_{C1}$ bzw. $U_{C2}$ auftreten. Die Figur 6e zeigt die beiden Eingangsspannungen $u_{14,C15}$ und $u_{14'C15'}$ am Verstärker 16, wobei nur deren Differenz verstärkt wird. Die Weiterbehandlung des Ausgangssignals des Verstärkers 16 ist gleich der Signalverarbeitung gemäß der Schaltung Figur 2, auf deren Beschreibung verwiesen wird.

Liste der Bezugszeichen:

| | |
|---|---|
| C1, C2 | Kondensatoren |
| 3, 4, 5 | Elektroden |
| $Z_{C,E3,4}$, $Z_{C,E4,5}$ | Impedanzen |
| 6 | Halbbrücke |
| R7 | Lastwiderstand |
| 8 | Impulsgenerator |
| 9 | Frequenzteiler |
| 10, 11 | Inverter |
| 12, 12' | Kurzzeit-Impulsgeber |
| 13 | Laufzeitglied |
| 14, 14' | elektrische Schalter, wie Torschaltungen |
| C15, C15' | Kondensatoren |
| 16 | Verstärker |
| R17, R18, R20 | Widerstände |
| C19 | Kondensator |
| 21 | Schmitt-Trigger |
| 22, 23 | Frequenzteiler |
| 24 | Meßpunkt |
| 25, 26, 27 | Ausgänge |
| T28 | elektrische Torschaltung |
| 29 | NOR-Gatter |
| 30, 31 | Eingänge des NOR-Gatters |
| C32 | Kondensator |
| 33, 34 | Inverter |
| T35 | Transistor-Vorverstärker |
| T36, T37, T38, T39 | Transistoren |
| 40 | Differenzverstärker |
| 41 | Stromspiegel-Verstärker |
| 42, 43, 44, 45, 46, 47 | Inverter |
| C48 | Koppelkondensator |
| 49, 50 | Leitungen |
| 51 | Inverter |
| $u_4, u_{4'}$ | Meßspannungen |
| $U_S, U_{S'}$ | Synchron-Demodulationssignal Eingangsspannungen des Verstärkers 16 |
| $U_{C1}, U_{C2}$ | Spannungen an den Elektroden 3 und 5. |

**Patentansprüche**

1. Vorrichtung zur Messung der Drehzahl und gegebenenfalls der Drehrichtung eines Flügelrades eines Flügelrad-Durchflußmessers in strömenden Flüssigkeiten, welches durch die Strömung der Flüssigkeit antreibbar ist, mit einem Gehäuse, in dem drei Elektroden (3, 4, 5) in Abstand benachbart voneinander angeordnet und von der Flüssigkeit benetzt sind, wobei die Anordnung so ist, daß das Flügelrad mit einer Kante seiner Flügel nacheinander dicht an den einzelnen Elektroden (3, 4, 5) vorbeistreicht, wobei an die beiden äußeren Elektroden (3, 5) mittels eines Impulsgenerators komplementäre Impulse einer Wechselspannung gelegt sind zur Messung der sich bei Rotation ändernden Impedanz der Flüssigkeit in einer elektrischen Auswerteschaltung, die zur Erzeugung eines Synchron-Demodulationssignals einen Synchron-Demodulator umfaßt, der von der Wechselspannung des Impulsgenerators (8) getaktet ist, dadurch gekennzeichnet, daß an der mittleren Elektrode (4) zur Bildung eines Spannungsteilers ein Lastwiderstand (R7) gegen Masse geschaltet ist, an dem ein Meßspannungssignal ($u_4$, $u_{4'}$) abgegriffen wird, das auf mindestens eine elektrische Torschaltung (14, 14', T28) gegeben wird, deren durch das Synchron-Demodulationssignal ($U_S$, $U_S$), des Impulsgenerators (8) gesteuerte Öffnungszeit synchron zu mindestens einer der Flanken der Wechselspannung des Impulsgenerators und von kurzer Dauer im Verhältnis zur Dauer der Impulse ($U_{C1}$, $U_{C2}$), an den äußeren beiden Elektroden (3, 5) ist, beispielsweise in einem Verhältnis von 1:300.

2. Vorrichtung nach Anspruch 1, dadurch gekennzeichnet, daß das Meßspannungssignal ($U_4$, $u_{4'}$) von der mittleren Elektrode (4) über einen Koppelkondensator (C48) ausgekoppelt und nach Passieren der elektrischen Torschaltung (14, 14', T28) auf mindestens einen Kondensator ($C_{15}$, $C_{15'}$) gelegt wird, wobei der Lastwiderstand (R7) während der Dauer der Synchron-Demodulationssignal ($U_S$, $U_{S'}$) parallel zum Kondensator ($C_{15'}$ $C_{15}'$) geschaltet ist und danach die Kondensatorspannung ($u_{C15}(t)$, $u_{C15'}(t)$) in einem Verstärker (16) verstärkt wird.

3. Vorrichtung nach Anspruch 2, dadurch gekennzeichnet, daß die elektrische Torschaltung (14, 14') mitsamt dem Kondensator ($C_{15}$, $C_{15'}$) doppelt vorhanden und an beide das Meßspannungssignal ($u_4$, $u_{4'}$) gelegt ist und das Synchron-Demodulationssignal ($U_S$, $U_{S'}$) auf die eine Torschaltung (14) direkt und auf die andere Torschaltung (14') invertiert gegeben und die Differenz der beiden Meßspannungssignale ($u_{14}$, $u_{14'}$) im Verstärker (16) verstärkt wird.

4. Vorrichtung nach Anspruch 2 oder 3, dadurch gekennzeichnet, daß das Ausgangssignal des Verstärkers (16) auf einen Komparator gegeben wird.

5. Vorrichtung nach einem der Ansprüche 1 oder 3, dadurch gekennzeichnet, daß als mittlere Elektrode (4) die Flügel des Flügelrades dienen, die elektrisch leitend sind, wobei die übrigen Elektroden (3, 5) derart angeordnet sind, daß sich zwischen diesen ein elektrisches Feld ausbildet, welches entsprechend der Stellung des Flügelrades auf demselben eine entsprechende Wechselspannung ($u_4$) hervorruft.

6. Vorrichtung nach den Ansprüchen 1 und 2 oder 1 und 3, dadurch gekennzeichnet, daß zur Erzeugung des kurzzeitigen Synchron-Demodulationssignals ($U_S$, $U_{S'}$) das Tastsignal des Impulsgenerators (8) auf mindestens einen Kurzzeit-Impulsgeber (12, 12') gegeben wird.

7. Vorrichtung nach Anspruch 6, dadurch gekennzeichnet, daß der Kurzzeit-Impulsgeber (12) aus einem veränderbaren Laufzeitglied (13) und einem NOR-Gatter (29) besteht, wobei auf den einen Eingang (30) das Tastsignal des Impulsgenerators (8) direkt und auf den anderen Eingang (31) das Tastsignal verzögert durch das Laufzeitglied (13) aufgegeben wird, wobei das Ausgangssignal ($U_S$) des NOR-Gatters (29) das Schaltsignal der nachfolgenden Torschaltung (14, T28) darstellt.

8. Vorrichtung nach Anspruch 1, dadurch gekennzeichnet, daß das Meßspannungssignal ($u_4$) von der mittleren Elektrode (4) galvanisch ausgekoppelt und nach Passieren der elektrischen Torschaltung (14, T28) auf einen Kondensator ($C_{15}$) gelegt wird, wobei der Lastwiderstand (R7) während der Dauer der Synchron-Demodulationssignale ($U_S$) parallel zum Kondensator ($C_{15}$) geschaltet ist und danach die Kondensatorspannung ($u_{c15}(t)$) verstärkt wird.

9. Vorrichtung nach einem der vorherigen Ansprüche, dadurch gekennzeichnet, daß der Lastwiderstand ein ohmscher Widerstand (R7) ist.

10. Vorrichtung nach Anspruch 9, dadurch gekennzeichnet, daß der ohmsche Widerstand (R7) hochohmig ist.

## Revendications

1. Dispositif pour mesurer la vitesse et, le cas échéant, la direction de rotation d'une roue à ailettes d'un débitmètre à roue à ailettes dans des courants de liquides, ladite roue à ailettes pouvant être entraînée par l'écoulement du liquide, comprenant un boîtier dans lequel trois électrodes (3, 4, 5) sont disposées avec un intervalle les unes à côté des autres et mouillées par le liquide, cette disposition étant telle que l'une des arêtes des ailettes du rotor passe tout près des électrodes individuelles, qu'aux deux électrodes extérieures (3, 5), au moyen d'un générateur d'impulsions, sont appliquées des impulsions complémentaires d'une tension alternative pour la mesure de l'impédance du liquide variant lors de la rotation dans un circuit électrique d'évaluation qui, pour engendrer un signal de démodulation synchrone, comprend un démodulateur synchrone qui est synchronisé par la tension alternative du générateur d'impulsions (8), caractérisé en ce que l'électrode médiane (4), pour créér un diviseur de tension, est dotée d'une résistance de charge mise à la masse et sur laquelle est prélevé un signal de tension de mesure ($u_4$, $u_{4'}$) qui est transmis à au moins un circuit porte (14, 14', T28), dont le temps d'ouverture réglé par le signal de démodulation synchrone ($U_S$, $U_S$), du générateur d'impulsions (8) est synchrone à au moins l'un des flancs de la tension alternative du générateur d'impulsions et est de courte durée par rapport à la durée des impulsions ($U_{C1}$, $U_{C2}$) au deux électrodes extérieures (3, 5), par exemple dans un rapport de 1:300.

2. Dispositif selon la revendication 1, caractérisé en ce que le signal de tension de mesure ($u_4$, $u_{4'}$) est découplé de l'électrode centrale (4) par l'intermédiaire d'un condensateur de couplage (C48) et que, après avoir passé le circuit porte (14, 14', T28), il est appliqué à au moins un condensateur ($C_{15}$, $C_{15'}$), la résistance de charge (R7) étant couplée parallèlement au condensateur ($C_{15}$, $C_{15'}$) pendant la durée des signaux de démodulation synchrones ($U_S$, $U_{S'}$) et qu'ensuite, la tension des condensateurs (($u_{c15}(t)$, $u_{c15'}(t)$) est amplifiée par un amplificateur (16).

3. Dispositif selon la revendication 2, caractérisé en ce que le circuit porte (14, 14') ainsi que le condesateur ($C_{15}$, $C_{15'}$) sont présents en double exemplaire, que le signal de tension de mesure ($u_4$, $u_{4'}$) est transmis à ces deux unités et que le signal de démodulation synchrone ($U_S$, $U_{S'}$) est transmis directement au circuit porte (14) et de façon invertie à l'autre circuit porte (14') et la différence des deux signaux de tension de mesure ($u_{14}$, $u_{14'}$) est amplifiée par l'amplificateur (16).

4. Dispositif selon l'une quelconque des revendications 2 ou 3, caractérisé en ce que le signal de sortie de l'amplificateur (16) est transmis à un comparateur.

5. Dispositif selon l'une quelconque des revendications 1 ou 3, caractérisé en ce que les ailettes de la roue à ailettes à conductivité électrique servent d'électrode médiane, les autres électrodes (3, 5) étant disposées de sorte qu'un champ électrique se forme entre elles lequel, en fonction de la position de la roue à ailettes sur celui-ci, produit une tension alternative corres-pondante ($u_4$).

6. Dispositif selon les revendications 1 et 2 ou 1 et 3, caractérisé en ce que, pour générer le signal de démodulation synchrone de courte durée ($U_S$, $U_{S'}$), le signal palpeur du générateur d'impulsions (8) est transmis à au moins un générateur d'impulsions de courte durée (12, 12').

7. Dispositif selon la revendication 6, caractérisée en ce que le générateur d'impulsions de courte durée (12) consiste en un élément de phase variable (13) et un mélangeur inverseur (29), le signal palpeur du générateur d'impulsions (8) étant transmis directement à l'une des l'entrées (30) et de façon retardée à l'autre entrée (31) par l'élément de phase (13), le signal de sortie ($U_S$) du mélangeur inverseur (29) faisant office de signal de commutation du circuit porte monté en aval (14, T28).

8. Dispositif selon la revendication 1, caractérisé en ce que le signal de tension de mesure ($u_4$) est découplé de l'électrode médiane (4) par voie galvanique et, après avoir passé le circuit porte (14, T28), est appliqué à un condensateur ($C_{15}$), la résistance de charge (R7) étant couplée parallèle-ment au condensateur ($C_{15}$) pendant la durée des signaux de démodulation synchrones ($U_S$) et que la tension du condensateur ($u_{c15}(t)$) est amplifiée par la suite.

9. Dispositif selon l'une quelconque des revendications précédentes, caractérisé en ce que la résistance de charge est une résistance ohmique (R7).

10. Dispositif selon la revendication 9, caractérisé en ce que la résistance ohmique (R7) est une résistance à valeurs ohmiques très élevées.

## Claims

1. Device to measure the speed and, if applicable, the rotation direction of an impeller of an impeller flowmeter in flowing liquids, which can be driven by the current of the liquid, having a housing in which there are three electrodes (3, 4, 5) arranged at a certain interval adjacent to other and in contact with the liquid, whereby the arrangement is such that one edge of the impeller's blades brushes close to the individual electrodes (3, 4, 5), whereby a pulse generator applies complementary pulses of an alternating current onto the two outer electrodes (3, 5) in order to measure the impedance of the liquid which changes during the rotation in an electric evaluating circuit which, for purposes of generating a synchronous demodulation signal, encompasses a synchronous demodulator, which is clocked by the alternating current of the pulse generator (8), characterized in that there is a grounded load resistor (R7) connected to the middle electrode (4) in order to form a voltage divider, and from this resistor a measurement voltage signal ($u_4$, $u_{4'}$) is tapped, which is transmitted to at least one electric gate circuit (14, 14', T28), whose opening time—regulated by the synchronous demodulation signal ($U_S$, $U_{S'}$) of the pulse generator (8)—is synchronous to at least one of the edges of the alternating current of the pulse generator and is of short duration in comparison to the duration of the pulse ($U_{C1}$, $U_{C2}$) on the two outer electrodes (3, 5), for example, at a ratio of 1:300.

2. Device according to Claim 1, characterized in that the mesurement voltage signal ($u_4$, $u_{4'}$) is decoupled from the middle electrode (4) via a coupling capacitor (C8) and applied onto at least one capacitor ($C_{15}$, $C_{15'}$) after passing the electric gate circuit (14, 14', T28), whereby the load resistor (R7) is switched in parallel to the capacitor ($C_{15}$, $C_{15'}$) for the duration of the synchronous demodulation signals ($U_S$, $U_{S'}$), and then the capacitor voltage (($U_{C15}(t)$, $U_{C15'}(t)$) is amplified in an amplifier (16).

3. Device according to Claim 2, characterized in that the electric gate circuit (14, 14'), together with the capacitor ($C_{15}$, $C_{15'}$), is present two-fold, in that the measurement voltage signal is applied onto both, in that the synchronous demodulation signal ($U_S$, $U_{S'}$) is applied directly onto the gate circuit (14) and inversely onto the other gate circuit (14'), and in that the differential of both measurement voltage signals ($u_4$, $u_{4'}$) is amplified in the amplifier (16).

4. Device according to Claim 2 or 3, characterized in that the output signal of the amplifier (16) is transmitted to a comparator.

5. Device according to Claim 1 or 3, characterized in that as the middle electrode (4), the blades of the impeller are used which are electrically conductive, whereby the other electrodes (3, 5) are arranged in such a way that an electric field is formed between these electrodes, which gives rise to a corresponding alternating current ($u_4$) on the impeller, depending on its position.

6. Device according to Claims 1 and 2 or 1 and 3, characterized in that the scanning signal of the pulse generator (8) is transmitted to at least one short-time pulser (12, 12') in order to generate the short-time synchronous demodulation signal ($U_S$, $U_{S'}$).

7. Device according to Claim 6, characterized in that the short-time pulser (12, 12') consists of an adjustable delay mechanism (13) and a NOR gate (29), whereby the scanning signal of the pulse generator (8) is transmitted directly to one input (30) and with a delay to the other input (31) by means of the delay mechanism (13), whereby the output signal ($U_S$) of the NOR gate (29) constitutes the switching signal of the subsequent gate circuit (14, T28).

8. Device according to Claim 1, characterized in that the measurement voltage signal ($u_4$) is galvanically decoupled from the middle electrode (4) and applied onto a capacitor ($C_{15}$) after passing the electric gate circuit (14, T28), whereby the load resistor (R7) is switched in parallel to the capacitor ($C_{15}$) for the duration of the synchronous demodulation signals ($U_S$), and then the capacitor voltage (($U_{C15}(t)$) is amplified.

9. Device according to one of the preceding Claims, characterized in that the load resistor is an ohm resistor (R7).

10. Device according to Claim 9, characterized in that the ohm resistor (R7) has a high impedance.

$C1$

$3$

$Z_{C,E3,4}$

$4$

$u_4$

$Z_{C,E4,5}$

$R7$

$C2$

$5$   $6$

Fig.1

$V_{DD}$

$9$   $10$   $C1$   $\boxed{3}$

$\dfrac{f}{2^4}$

$11$   $C2$   $\boxed{5}$

$R_{17}$

$16$

$14$   $21$   $22$   $23$

$\boxed{4}$   $u_4$   s.t.   $\dfrac{f}{2^2}$   $\dfrac{f}{2^4}$

$R7$   $C_{15}$   $R_{18}$   $24$   $25$   $26$   $27$

$8$   $\tau$   $C_{19}$

$12$   $U_S$   $R_{20}$

$C32$   $V_{SS}$

Fig. 2

Fig. 3

EP 0 171 047 B1

Fig.4

Fig. 5

Fig. 6